# FASCICULE DE BREVET EUROPEEN

(11) **EP 3 670 287 B1**
(45) Date de publication et mention de la délivrance du brevet: **17.03.2021**
(21) Numéro de dépôt: 19218495.0
(22) Date de dépôt: 20.12.2019
(51) Int. Cl.: B61D 33/00, B60N 2/015, B60N 2/24, B61D 49/00, B60N 3/02, B60N 2/02

(54) **HABITACLE DE VÉHICULE DE TRANSPORT DE PASSAGERS**
INNENRAUM EINES PASSAGIERTRANSPORTFAHRZEUGS
PASSENGER COMPARTMENT OF A PASSENGER TRANSPORT VEHICLE

(30) Priorité: 20.12.2018 FR 1873583
(43) Date de publication de la demande: 24.06.2020
(73) Titulaire: ALSTOM Transport Technologies, 93400 Saint-Ouen-sur Seine (FR)
(72) Inventeur: PUJOL, Claude, 92500 RUEIL MALMAISON (FR); PREISS, Paul, 67110 REICHSHOFFEN (FR); ALTESA-CABANAS, Jaume, 08100 MOLLET DEL VALLES (ES)
(74) Mandataire: Lavoix

(56) Documents cités:
- DE-A1- 4 403 460
- FR-A1- 2 336 104
- JP-A- S5 733 031
- JP-B2- 3 340 205

## Description

La présente invention concerne un habitacle de véhicule de transport de passagers, s'étendant principalement selon une direction longitudinale, comprenant :
- au moins un compartiment voyageur comprenant au moins deux parois latérales s'étendant chacune selon une direction parallèle à la direction longitudinale, deux parois transversales s'étendant chacune selon une direction transversale sensiblement perpendiculaire à la direction longitudinale, et un plancher relié aux parois latérales et transversales,
- au moins un siège fixé sur une paroi transversale ou une paroi latérale du compartiment voyageur, destiné à recevoir un voyageur,
- au moins un pied fixé au siège.

Le véhicule de transport de passagers est par exemple un véhicule ferroviaire tel qu'un train, un métro ou un tramway, ou un véhicule routier tel qu'un bus.

Classiquement, ce type d'habitacle comprend une pluralité de sièges, par exemple des banquettes, fixés au plancher du compartiment voyageur, par exemple par boulonnage, afin d'assurer un bon maintien des sièges sur le plancher.

Ainsi, de multiples perçages dans le plancher sont nécessaires pour fixer la pluralité de sièges, ce qui rend l'aménagement et le réaménagement de l'habitacle long et fastidieux.

De plus, il est difficile de nettoyer correctement la zone de contact entre le pied et le plancher du compartiment.

FR 2 336 104 A1 décrit un habitacle selon le préambule de la revendication 1.

L'un des buts de l'invention est de pallier ces inconvénients en proposant un habitacle de véhicule de transport de passagers qui permette une bonne reprise des efforts verticaux de compression du plancher lorsqu'un passager s'assoit sur le siège, un nettoyage facile de la surface située sous le siège et qui facilite l'aménagement et le réaménagement intérieur des sièges à l'intérieur de l'habitacle.

A cet effet, l'invention concerne un habitacle de véhicule de transport de passagers selon la revendication 1.

Ainsi, aucune fixation au plancher n'est requise et l'aménagement intérieur de l'habitacle est facilité. De plus, lorsque le siège n'est pas occupé par un passager, le pied ne touche pas le plancher, ce qui facilite le nettoyage de la surface de plancher sous le siège et plus particulièrement sous le pied. Lorsque le siège est occupé par un passager, le pied touche le sol, ce qui permet une bonne reprise des efforts verticaux de compression générés par le poids du passager sur le siège.

Selon des modes de réalisation différents, l'habitacle comprend en outre une ou plusieurs des caractéristiques des revendications 2 à 6, prises isolément ou selon toutes les combinaisons techniquement possibles.

L'invention concerne également un véhicule de transport de passagers comprenant au moins une voiture comportant un habitacle tel que décrit ci-dessus La description présente deux exemples correspondant à l'état de l'art et un mode de réalisation de l'invention. Z

D'autres aspects et avantages de l'invention apparaîtront à la lecture de la description qui suit, donnée à titre d'exemple et faite en référence aux dessins annexés parmi lesquels :
- [Fig 1] la figure 1 est une représentation partielle en perspective d'un habitacle selon un premier exemple correspondant à l'état de l'art,
- [Fig 2] la figure 2 est une schématique de face d'un siège de l'habitacle de la figure 1,
- [Fig 3] la figure 3 est une représentation partielle en perspective d'un habitacle selon un deuxième exemple correspondant à l'état de l'art, et
- [Fig 4] la figure 4 est une représentation en perspective d'un habitacle selon un mode de réalisation de l'invention.

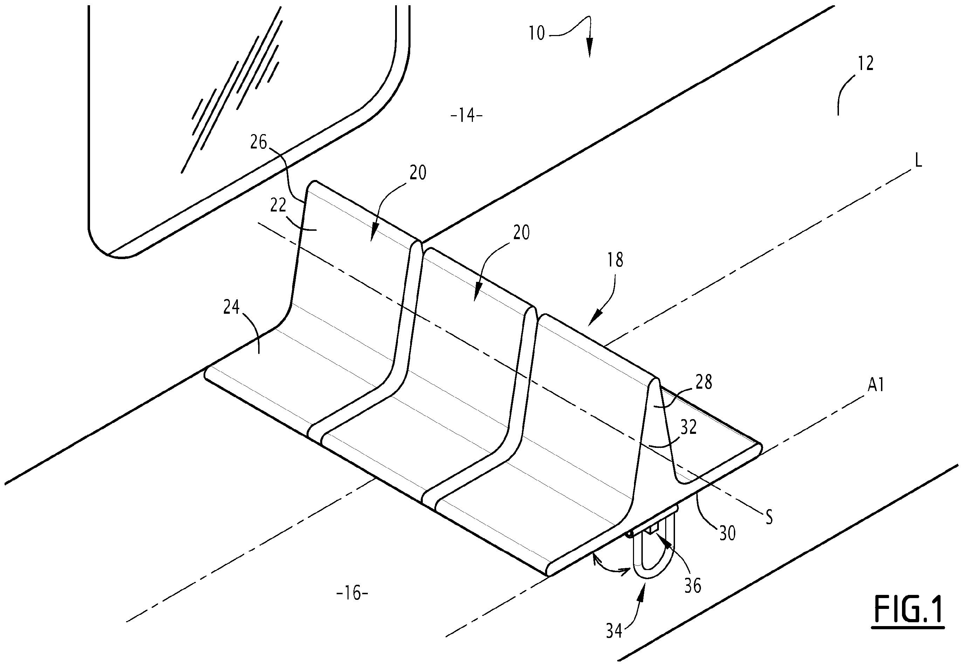

Un habitacle 10 de véhicule de transport de passagers selon un premier exemple correspondant à l'état de l'art est partiellement représenté en perspective sur la figure 1

Le véhicule de transport de passagers est par exemple un véhicule ferroviaire tel qu'un train, un métro ou un tramway. En variante, le véhicule de transport de passagers est un véhicule routier tel qu'un bus. L'habitacle est l'espace destiné à accueillir les passagers et/ou le conducteur du véhicule.

Dans l'exemple des figures 1 à 4, l'habitacle 10 est un habitacle d'une voiture de véhicule ferroviaire.

L'habitacle 10 s'étend principalement selon une direction longitudinale L.

L'habitacle 10 comprend au moins un compartiment voyageur 12 recevant les voyageurs.

Le compartiment voyageur 12 comprend et est délimité par au moins deux parois latérales 14 s'étendant chacune selon une direction parallèle à la direction longitudinale et au moins deux parois transversales s'étendant chacune selon une direction sensiblement perpendiculaire à la direction longitudinale. Par souci de clarté, la figure 1 ne représente qu'une unique paroi latérale 14.

Le compartiment 12 comprend et est délimité en outre par un plancher 16 relié aux parois latérales 14 et transversales.

L'habitacle 10 comprend au moins un siège 18 fixé sur une paroi transversale ou une paroi latérale 14 du compartiment voyageur 12, s'étendant dans le compartiment voyageur 12 et destiné à recevoir au moins un voyageur. Dans la suite de la description, on considérera que le siège 18 est fixé à une paroi latérale 14, l'invention s'appliquant de façon similaire lorsque le siège est fixé à une paroi transversale.

Comme visible sur la figure 1, le siège 18 est par exemple une banquette comprenant une pluralité de places 20. Chaque place 20 comprend un dossier 22 et une assise 24. Il est entendu que le siège 18 pourrait comprendre une seule place ou un nombre quelconque de places.

Comme représenté sur la figure 1, le siège 18 est par exemple une double banquette. Le siège 18 s'étend selon une direction d'élongation S sensiblement perpendiculaire à la paroi latérale 14 à laquelle est fixé le siège 18. Ainsi, en position assise, les passagers sont sensiblement orientés selon la direction longitudinale L dans le sens de la marche du véhicule ferroviaire ou à contre-sens du sens de la marche du véhicule ferroviaire.

Le siège 18 comprend une première extrémité 26 fixée à la paroi latérale 14 et une deuxième extrémité 28 libre.

Le siège 18 comprend une surface inférieure 30 orientée vers le plancher 16 de l'habitacle 10.

Le siège 18 comprend également une surface latérale 32, au niveau de sa deuxième extrémité 28, sensiblement parallèle à la paroi latérale 14 de l'habitacle 10 auquel est fixé le siège 18.

Le siège 18 comprend en outre un pied 34 fixé au siège 18.

Comme visible sur la figure 1, le pied 34 est fixé sur la surface inférieure 30 du siège 18 et s'étend entre cette surface inférieure 30 et le plancher 16.

Le pied 34 est fixé au siège 18 à la deuxième extrémité 28 du siège 18.

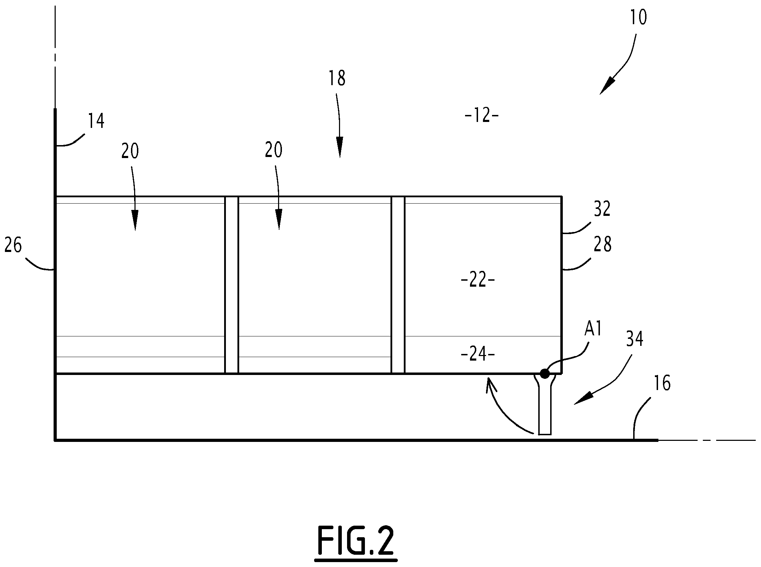

Le siège 18 est configurable entre une première configuration dans laquelle le siège 18 est en porte à faux et le pied 34 est à l'écart du plancher 16 (figure 2) et une deuxième configuration du siège dans laquelle le pied 34 est en contact avec le plancher 16. Dit autrement, dans la première configuration du siège, le pied 34 ne touche pas le plancher 16.

Dans la première configuration, le siège 18 ne reçoit pas de passager. Dans la deuxième configuration, le siège 18 reçoit au moins un passager ou une autre charge quelconque.

Dans la deuxième configuration du siège, le pied 34 assure une bonne reprise des efforts exercés par le poids du passager sur le siège 18.

Avantageusement, le pied 34 est mobile entre au moins deux positions par rapport au siège 18.

Avantageusement, le pied 34 est mobile en rotation par rapport au siège 18 autour d'un axe A1 sensiblement parallèle à la direction longitudinale L.

Ainsi, dans une première position du pied 34, le pied 34 s'étend selon une direction sensiblement perpendiculaire à la surface inférieure 30 du siège 18.

Dans une deuxième position, le pied 34 s'étend sous le siège 18 selon une direction sensiblement parallèle à la direction d'élongation S du siège 18.

En variante ou en complément, le pied 34 est mobile entre la première position et une pluralité de positions intermédiaires stables entre la première position et la deuxième position. Par « stable », on entend que lorsque le pied 34 occupe une des positions de la pluralité de positions intermédiaires, le pied 34 ne se déplace pas dans la première position par lui-même, c'est-à-dire par exemple sous l'effet de la pesanteur. Dit autrement, il est nécessaire d'exercer une force sur le pied 34 pour le déplacer de la première vers la deuxième position et plus généralement vers la pluralité de positions intermédiaires.

Dans la première configuration du siège 18, le pied 34 occupe la première position, la deuxième position ou l'une quelconque des positions intermédiaires.

Par exemple, dans la première configuration du siège 18, le pied 34 occupe la première position. La distance entre le pied 34 et le plancher 16 est alors comprise entre 1 mm et 2 mm.

Par exemple, dans la première configuration du siège 18, le pied 34 occupe la deuxième position. La distance entre le pied 34 et le plancher 16 est alors comprise entre 10 cm et 1 m.

Dans la deuxième configuration du siège 18, le pied 34 occupe la première position. Le pied 34 s'étend alors selon une direction verticale et touche le sol.

Ceci facilite le nettoyage de la surface de plancher 16 située sous le siège 18 car le pied 34 ne constitue pas un obstacle pour les outils de nettoyage du plancher 16.

Le pied 34 est par exemple formé par un tube en métal en forme de U comme représenté sur la figure 1.

Avantageusement, le pied 34 comprend un dispositif de verrouillage 36 de la position du pied 34 dans au moins l'une des deux positions du pied 34.

Par exemple, le dispositif de verrouillage 36 bloque le pied 34 dans la première position. Le dispositif de verrouillage 36 permet de garantir que le déplacement du pied 34 entre la première position et la deuxième position ne soit effectué que par une personne habilitée, par exemple lors du nettoyage du compartiment voyageur 12.

Préférentiellement, le dispositif de verrouillage 36 comprend une serrure actionnable avec une clef adaptée par un opérateur.

La serrure est par exemple une serrure pour clef carrée ou triangulaire ou clef de berne.

Ceci garantit que le déplacement du pied 34 n'est pas effectué par un voyageur malintentionné ou par inadvertance.

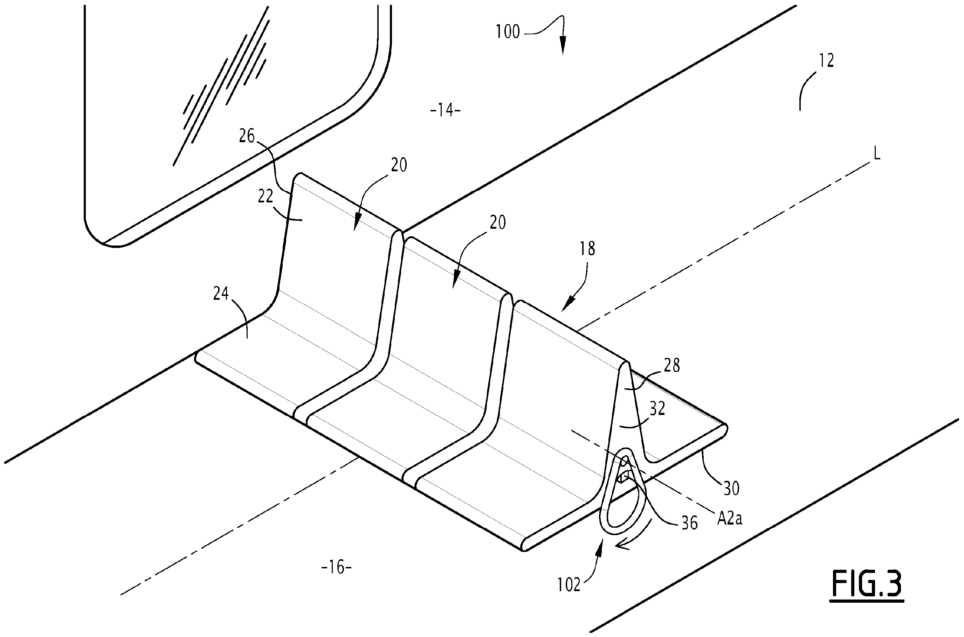

La figure 3 présente un habitacle 100 selon un deuxième exemple correspondant à l'état de l'art.

L'habitacle 100 est analogue à l'habitacle 10 du premier exemple. Les caractéristiques identiques portent les mêmes références numériques et ne seront pas décrites en détail. Seules les différences avec l'habitacle 10 du premier exemple seront décrites de manière détaillée ci-dessous.

Dans l'exemple de la figure 3, le pied 102 est fixé sur la surface latérale du siège 32.

Le pied 102 est alors avantageusement mobile en rotation par rapport au siège 18 autour d'un axe sensiblement perpendiculaire à la direction longitudinale A2a.

Ainsi, dans une première position du pied 102, le pied 102 s'étend selon une direction sensiblement perpendiculaire à la surface inférieure 30 du siège 18.

Dans une deuxième position, le pied 102 s'étend le long de la surface latérale 32 du siège 18 selon une direction sensiblement parallèle à la direction longitudinale L.

Le pied 102 est mobile entre la première position et une pluralité de positions intermédiaire stables entre la première position et la deuxième position.

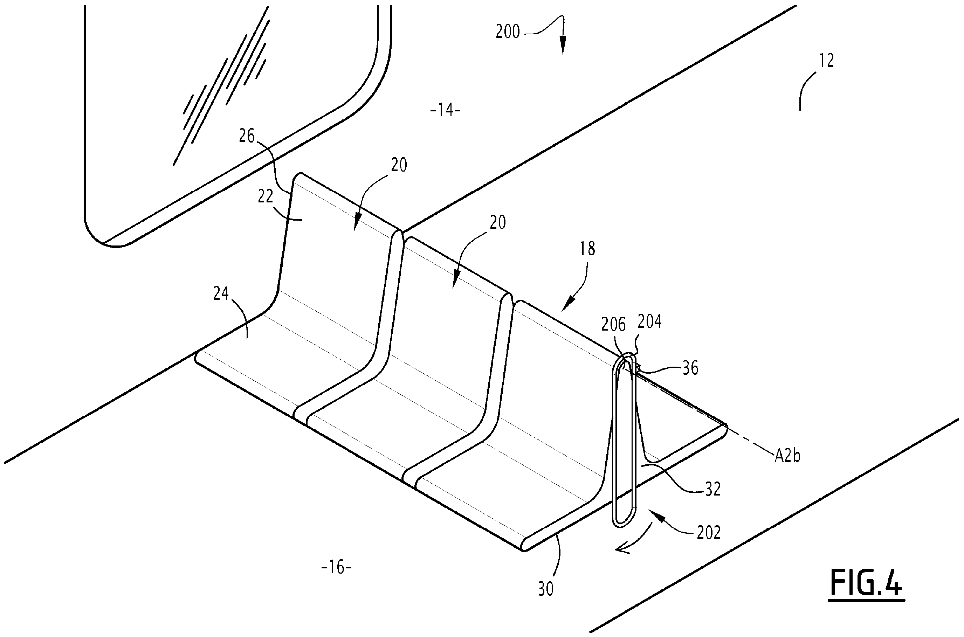

La figure 4 présente un habitacle 200 selon un mode de réalisation de l'invention.

L'habitacle 200 est analogue à l'habitacle 100 du deuxième exemple.

Les caractéristiques identiques portent les mêmes références numériques et ne seront pas décrites en détail. Seules les différences avec l'habitacle 100 du deuxième exemple seront décrites de manière détaillée ci-dessous.

Dans ce mode de réalisation, dans la première position du pied 202, le pied 202 s'étend le long de la surface latérale 32. Le pied 202 comprend une partie disposée en saillie vers le haut par rapport au siège 18 formant une un organe de maintien 204 pour passager, notamment une barre de maintien ou une poignée de maintien pour un passager en position debout.

Le pied 202 est alors avantageusement mobile en rotation par rapport au siège 18 autour d'un axe sensiblement perpendiculaire à la direction longitudinale A2b.

L'axe de rotation A2b du pied est préférentiellement localisé au niveau d'une extrémité supérieure 206 du dossier du siège 18.

Ainsi, dans l'habitacle 10, 100, 200 selon l'invention, les sièges 18 peuvent être facilement déplacés en cas de réaménagement de l'habitacle 10, 100, 200 car les sièges 18 ne sont pas fixés au plancher 16. Dans la première configuration, le pied 34, 102, 202 assure une bonne reprise des efforts générés par le poids du passager sur le siège 18. Dans la première configuration, le nettoyage du plancher 16 est facilité car le pied 34, 102, 202 n'est pas en contact avec le plancher 16.

Le pied 34, 102, 202 mobile par rapport au siège 18 facilite davantage le nettoyage du plancher 16. Les accessoires et ustensiles de nettoyage peuvent facilement accéder à la surface de plancher 16 situé sous le siège 18.

## Revendications

1. Habitacle (10, 100, 200) de véhicule de transport de passagers, s'étendant principalement selon une direction longitudinale (L), l'habitacle (10, 100, 200) comprenant :
- au moins un compartiment voyageur (12) comprenant au moins deux parois latérales (14) s'étendant chacune selon une direction parallèle à la direction longitudinale (L), deux parois transversales s'étendant chacune selon une direction transversale sensiblement perpendiculaire à la direction longitudinale (L), et un plancher (16) relié aux parois latérales (14) et transversales,
- au moins un siège (18) fixé sur une paroi transversale (14) ou une paroi latérale du compartiment voyageur (12), destiné à recevoir un voyageur,
- au moins un pied (102, 202) fixé au siège (18),
le siège (18) étant configurable entre une première configuration dans laquelle le siège (18) est en porte à faux et le pied (102, 202) est à l'écart du plancher (16) et une deuxième configuration dans laquelle le pied (102, 202) est en contact avec le plancher (16), **caractérisé en ce que**
le siège (18) comprend une surface latérale (32) sensiblement parallèle à la paroi à laquelle le siège (18) est fixé, le pied (102, 202) étant fixé sur la surface latérale (32) du siège (18) et **en ce que** le pied (102, 202) comprend un organe de maintien (204) pour passager, notamment une barre de maintien ou une poignée de maintien pour un passager en position debout, disposé en saillie vers le haut par rapport à une assise du siège (18).

2. Habitacle (10, 100, 200) selon la revendication 1, dans lequel le pied (102, 202) est mobile entre au moins deux positions par rapport au siège (18).

3. Habitacle (10, 100, 200) selon la revendication 2, dans lequel le pied (102, 202) comprend un dispositif de verrouillage (36) de la position du pied (102, 202) dans au moins l'une des deux positions du pied (102, 202).

4. Habitacle (10, 100, 200) selon l'une quelconque des revendications 1 à 3, dans lequel le siège (18) comprend suivant la direction transversale, une première extrémité (26) fixée sur une paroi latérale (14) du compartiment voyageur (12) et une deuxième extrémité (28), opposé à la première extrémité (26), et à laquelle le pied (102, 202) est fixé.

5. Habitacle (10, 100, 200) selon l'une quelconque des revendications 1 à 4, dans lequel le pied (102, 202) est mobile en rotation par rapport au siège (18) autour d'un axe (A2b) sensiblement perpendiculaire à la direction longitudinale (L).

6. Habitacle (10, 100, 200) selon l'une quelconque des revendications 1 à 5, dans lequel, le pied (102, 202) est mobile en translation par rapport au siège suivant un axe vertical.

7. Véhicule de transport de passagers comprenant au moins une voiture comportant un habitacle (10, 100, 200) selon l'une quelconque des revendications 1 à 6.

## Patentansprüche

1. Innenraum (10, 100, 200) eines Personenverkehrsfahrzeugs, der sich hauptsächlich in einer Längsrichtung (L) erstreckt, wobei der Innenraum (10, 100, 200) umfasst:
- mindestens ein Fahrgastabteil (12), das mindestens zwei Seitenwände (14), die sich jeweils in einer Richtung parallel zur Längsrichtung (L) erstrecken, zwei Querwände, die sich jeweils in einer Querrichtung im Wesentlichen senkrecht zur Längsrichtung (L) erstrecken, und einen Boden (16), der mit den Seitenwänden (14) und Querwänden verbunden ist, umfasst,
- mindestens einen an einer Querwand (14) oder einer Seitenwand des Fahrgastabteils (12) befestigter Sitz, der vorgesehen ist, einen Fahrgast aufzunehmen,
- mindestens einen Fuß (102, 202), der an dem Sitz (18) befestigt ist, wobei
der Sitz (18) zwischen einer ersten Konfiguration, in der der Sitz (18) hervorsteht und der Fuß (102, 202) vom Boden (16) beabstandet ist, und einer zweiten Konfiguration, in der der Fuß (102, 202) in Kontakt mit dem Boden (16) ist, konfigurierbar ist, **dadurch gekennzeichnet, dass**
der Sitz (18) eine Seitenfläche (32) im Wesentlichen parallel zu der Wand, an der der Sitz (18) befestigt ist, umfasst, wobei der Fuß (102, 202) an der Seitenflächen (32) des Sitzes (18) befestigt ist, und dass der Fuß (102, 202) ein Halteelement (204) für einen Fahrgast, insbesondere eine Haltestange oder einen Haltegriff für einen stehenden Fahrgast umfasst, das nach oben in Bezug auf eine Sitzfläche des Sitzes (18) herausragend angeordnet ist.

2. Innenraum (10, 100, 200) nach Anspruch 1, bei dem der Fuß (102, 202) zwischen mindestens zwei Position in Bezug auf den Sitz (18) beweglich ist.

3. Innenraum (10, 100, 200) nach Anspruch 2, bei dem der Fuß (102, 202) eine Verriegelungsvorrichtung (36) für die Position des Fußes (102, 202) in mindestens einer der zwei Positionen des Fußes (102, 202) umfasst.

4. Innenraum (10, 100, 200) nach einem beliebigen der Ansprüche 1 bis 3, bei dem der Sitz (18) gemäß der Querrichtung ein erstes Ende (26), das an der Seitenwand (14) des Fahrgastabteils (12) befestigt ist, und ein zweites Ende (28), entgegengesetzt zum ersten Ende (26), und an dem der Fuß (102, 202) befestigt ist, umfasst.

5. Innenraum (10, 100, 200 nach einem beliebigen der Ansprüche 1 bis 4, bei dem der Fuß (102, 202) in Bezug auf den Sitz (18) um eine Achse (A2b) im Wesentlichen senkrecht zur Längsrichtung (L) drehbeweglich ist.

6. Innenraum (10, 100, 200) nach einem beliebigen der Ansprüche 1 bis 5, bei dem der Fuß (102, 202) translatorisch in Bezug auf den Sitz gemäß einer senkrechten Achse beweglich ist.

7. Personenverkehrsfahrzeug, das mindestens einen Wagen umfasst, der einen Innenraum (10, 100, 200) nach einem beliebigen der Ansprüche 1 bis 6 aufweist.

## Claims

1. Passenger transport vehicle body (10, 100, 200) extending principally in a longitudinal direction (L), the body (10, 100, 200) comprising:
- at least one passenger compartment (12) comprising at least two side walls (14) each extending in a direction parallel to the longitudinal direction (L), two transverse walls each extending in a transverse direction substantially perpendicular to the longitudinal direction (L), and a floor (16) connected to the side walls (14) and transverse walls,
- at least one seat (18) which is fixed to a transverse wall (14) or to a side wall of the passenger compartment (12) and is to receive a passenger,
- at least one foot (102, 202) fixed to the seat (18),
the seat (18) being configurable between a first configuration in which the seat (18) is cantilevered and the foot (102, 202) is spaced apart from the floor (16), and a second configuration in which the foot (102, 202) is in contact with the floor (16), **characterised in that**
the seat (18) comprises a lateral surface (32) substantially parallel to the wall to which the seat (18) is fixed, the foot (102, 202) being fixed to the lateral surface (32) of the seat (18), and **in that** the foot (102, 202) comprises a holding member (204) for a passenger, especially a holding bar or a holding handle for a passenger in a standing position, which holding member is arranged so as to project upwards relative to a seat base of the seat (18).

2. Body (10, 100, 200) according to claim 1, wherein the foot (102, 202) is movable between at least two positions relative to the seat (18).

3. Body (10, 100, 200) according to claim 2, wherein the foot (102, 202) comprises a locking device (36) for locking the position of the foot (102, 202) in at least one of the two positions of the foot (102, 202).

4. Body (10, 100, 200) according to any one of claims 1 to 3, wherein the seat (18) comprises, in the transverse direction, a first end (26) fixed to a side wall (14) of the passenger compartment (12) and a second end (28), opposite the first end (26), and to which the foot (102, 202) is fixed.

5. Body (10, 100, 200) according to any one of claims 1 to 4, wherein the foot (102, 202) is rotatable relative to the seat (18) about an axis (A2b) substantially perpendicular to the longitudinal direction (L).

6. Body (10, 100, 200) according to any one of claims 1 to 5, wherein the foot (102, 202) is movable in translation relative to the seat along a vertical axis.

7. Passenger transport vehicle comprising at least one carriage having a body (10, 100, 200) according to any one of claims 1 to 6.
